# FASCICULE DE BREVET EUROPEEN

(11) **EP 3 617 026 B1**
(45) Date de publication et mention de la délivrance du brevet: **02.12.2020**
(21) Numéro de dépôt: 19194655.7
(22) Date de dépôt: 30.08.2019
(51) Int. Cl.: B61D 17/04, B61D 17/06

(54) **CABINE POUR VÉHICULE FERROVIAIRE ET PROCÉDÉ D'ASSEMBLAGE**
KABINE FÜR SCHIENENFAHRZEUG, UND MONTAGEVERFAHREN
CABIN FOR A RAILWAY VEHICLE AND ASSEMBLY METHOD

(30) Priorité: 31.08.2018 FR 1857872
(43) Date de publication de la demande: 04.03.2020
(73) Titulaire: ALSTOM Transport Technologies, 93400 Saint-Ouen (FR)
(72) Inventeur: CEBE, Christian, 90000 BELFORT (FR); CHIARANDINI, Bruno, 90000 BELFORT (FR)
(74) Mandataire: Lavoix

(56) Documents cités:
- EP-A2- 2 325 065
- FR-A- 1 129 713
- FR-A1- 2 765 543
- JP-A- H11 198 803

## Description

La présente invention concerne un procédé d'assemblage d'une cabine pour véhicule ferroviaire.

Elle concerne également une telle cabine.

Certaines structures de cabine, notamment de locomotives de manœuvre, sont monoblocs et disposées au milieu de la locomotive de manœuvre en première monte. Les structures de cabine sont disposées et prêtes à accueillir l'ensemble de leurs équipements internes, qui sont insérés par les ouvertures des structures de cabine (fenêtre et porte) et montés à l'intérieur des structures de cabine. Afin de pouvoir passer par ces ouvertures, ces équipements, tels que pupitre, armoires électriques, sièges..., sont en général fractionnés pour être installés en les introduisant par les portes ou les fenêtres des structures de cabine. Ces équipements sont non finalisés et non testés au moment de leur installation.

Ainsi, les différentes parties de ces équipements doivent être assemblées une fois qu'elles sont à l'intérieur de la cabine, et testées in situ.

Le document FR 2 765 543 A1 décrit un procédé d'assemblage d'une cabine pour véhicule ferroviaire, comprenant les étapes suivantes :
- fabrication d'une structure mécano-soudée, la structure étant adaptée pour former un plancher et des parois latérales de la cabine, la structure définissant un espace intérieur destiné à recevoir des équipements de cabine, les parois latérales définissant ensemble au moins une ouverture de la structure, l'ouverture étant opposée au plancher selon une direction destinée à être verticale,
- fixation d'au moins un des équipements de cabine sur la structure, l'équipement de cabine fixé étant au préalable transporté dans l'espace intérieur via l'ouverture, et
- fixation d'un élément de toiture sur la structure, l'élément de toiture fermant au moins partiellement l'ouverture.

Le document FR 2 765 543 A1 décrit une cabine pour véhicule ferroviaire, la cabine comprenant :
- une structure mécano-soudée, la structure étant adaptée pour former un plancher et des parois latérales de la cabine, la structure définissant un espace intérieur, les parois latérales définissant ensemble au moins une ouverture de la structure, l'ouverture étant opposée au plancher selon une direction destinée à être verticale,
- au moins un équipement de cabine situé dans l'espace intérieur et fixé sur la structure, et
- un élément de toiture rapporté sur la structure et fermant au moins partiellement l'ouverture.

Ces opérations de fabrication, bien que donnant des résultats satisfaisants, sont relativement complexes et coûteuses.

Ainsi, un but de l'invention est de réduire le coût de fabrication d'une telle cabine.

A cet effet, l'invention concerne un procédé d'assemblage selon la revendication 1.

Selon des modes particuliers de réalisation, le procédé comprend l'une ou plusieurs des caractéristiques correspondant aux revendications 2 à 6, prise(s) isolément ou selon toutes les combinaisons techniquement possibles.

L'invention concerne également une cabine pour véhicule ferroviaire selon la revendication 7.

L'invention sera mieux comprise à la lecture de la description qui va suivre, donnée uniquement à titre d'exemple et faite en se référant aux dessins annexés, sur lesquels :
- la figure 1 est une vue en perspective, éclatée selon une direction verticale, d'une cabine selon l'invention, certains éléments de finition de la cabine n'étant pas représentés,
- la figure 2 est une vue en perspective de la cabine représentée sur la figure 1, les équipements de la cabine n'étant pas représentés, et l'élément de toiture étant rapporté sur la structure, et
- la figure 3 est une vue de détail, en coupe selon un plan vertical, de la jonction entre la structure de la cabine et l'élément de toiture représentés sur les figures 1 et 2.

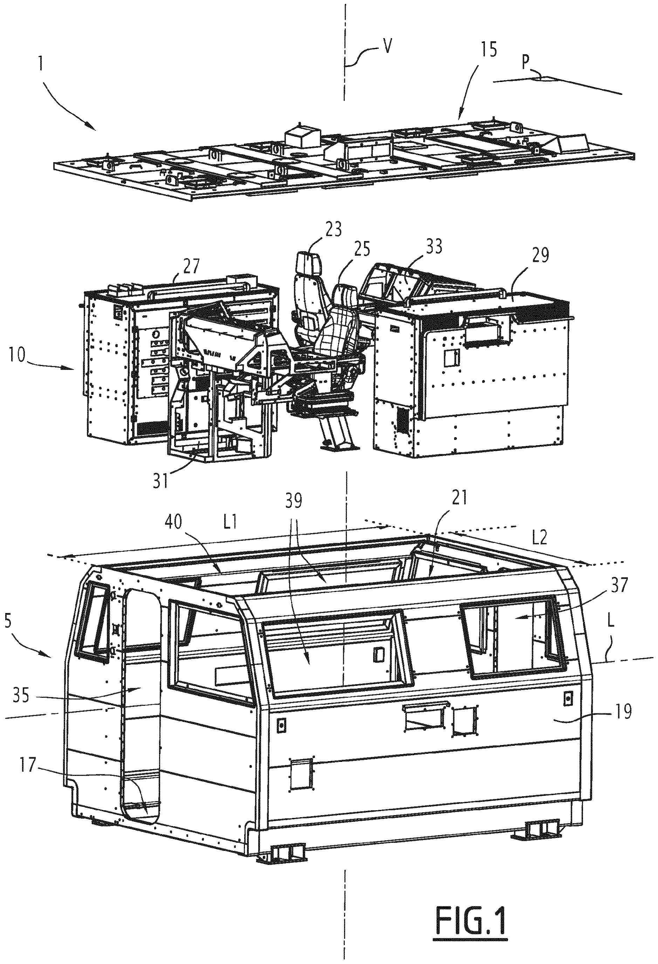

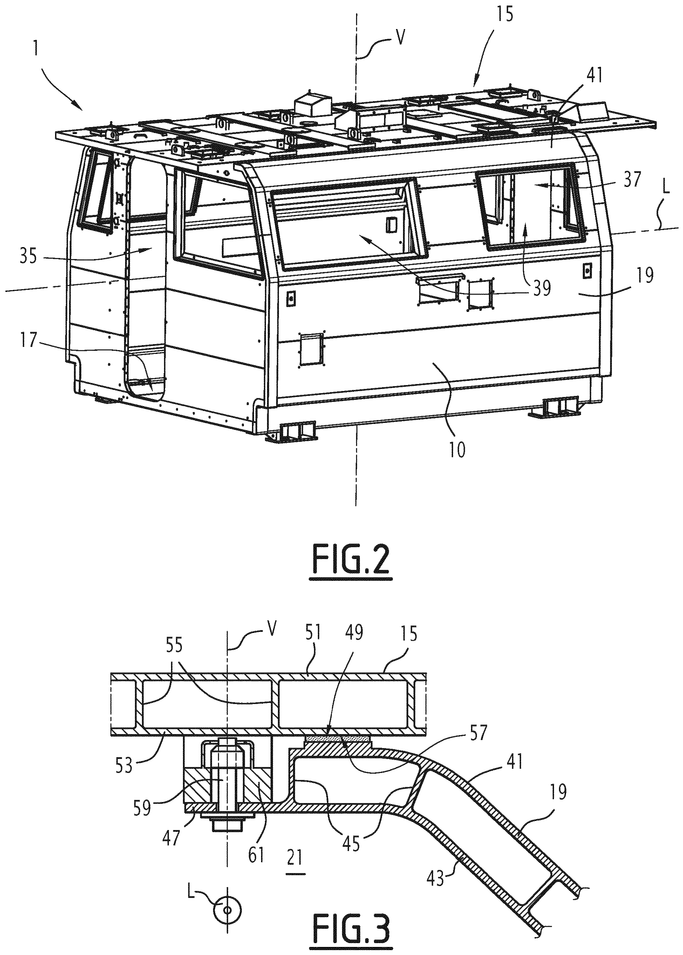

En référence aux figures 1 et 2, on décrit une cabine 1 selon l'invention pour un véhicule ferroviaire (non représenté).

Le véhicule ferroviaire est avantageusement une locomotive, par exemple une locomotive de manœuvre dans laquelle la cabine 1 est par exemple située sensiblement au milieu du véhicule ferroviaire selon une direction longitudinale L de ce véhicule.

La cabine 1 comprend une structure 5 mécano-soudée, avantageusement en un seul bloc, une pluralité d'équipements de cabine 10, et un élément de toiture 15.

La structure 5 forme un plancher 17, et des parois latérales 19 de la cabine 1. La structure 5 définit un espace intérieur 21 de la cabine 1 destiné à recevoir les équipements de cabine 10.

Les équipements de cabine 10 comprennent par exemple deux sièges 23, 25 (figure 1), deux armoires électriques 27, 29, et deux pupitres 31, 33 adaptés pour la commande du véhicule ferroviaire. Chacun des équipements de cabine 10 forme un bloc adapté pour être pré-assemblé et testé.

Les sièges 23 et 25 font par exemple respectivement face aux pupitres 33 et 31 selon la direction longitudinale L.

Les armoires électriques 27, 29 sont par exemple connectées électriquement aux pupitres 31, 33.

Les parois latérales 19 définissent deux portes 35, 37 et des fenêtres 39 formant des ouvertures latérales. Toutefois, les parois latérales 19 sont dépourvues de toute ouverture latérale par laquelle il serait possible de faire passer les blocs formés par les équipements de cabine 10 vers l'espace intérieur 21.

Les portes 35, 37 sont par exemple opposées l'une à l'autre longitudinalement. Les portes 35, 37 sont suffisamment larges pour permettre le passage d'un opérateur (non représenté), mais trop étroites pour permettre le passage d'au moins certains des équipements de cabine 10.

Les fenêtres 39 sont toutes trop étroites pour permettre le passage d'au moins certains des équipements de cabine 10.

Les parois latérales 19 définissent également ensemble une ouverture 40 dans la structure 5, l'ouverture étant opposée au plancher 17 selon une direction verticale V perpendiculaire à la direction longitudinale L.

Comme visible sur la figure 3, les parois latérales 19, en tout cas au moins celles s'étendant longitudinalement, comprennent, par exemple, une enveloppe externe 41 et une enveloppe interne 43 reliées par des nervures 45.

L'ouverture 40 est par exemple rectangulaire ou carrée, et avantageusement sensiblement horizontale.

L'ouverture 40 présente une extension longitudinale L1 et une extension transversale L2.

L1 est par exemple supérieure à la longueur de l'équipement 10 le plus long.

L2 est par exemple supérieure à la largeur de l'équipement 10 le plus large.

Les parois latérales 19 définissent un bord 47 délimitant l'ouverture 40 et sur lequel l'élément de toiture 15 est fixé, par exemple par boulonnage.

Le bord 47 est par exemple situé dans le prolongement de l'enveloppe interne 43.

L'enveloppe externe 41 définit une surface de collage 49 sur laquelle l'élément de toiture 15 est collé et étanché.

La surface de collage 49 et le bord 47 sont avantageusement horizontaux.

L'élément de toiture 15 s'étend sensiblement dans un plan P, par exemple perpendiculaire à la direction verticale V. L'élément de toiture 15 ferme au moins partiellement, et, dans l'exemple représenté, totalement, l'ouverture 40. L'élément de toiture 15 est par exemple rectangulaire ou carré en vue selon la direction V.

Par « fermer au moins partiellement », on entend ici que l'élément de toiture 15 s'étend en travers de l'ouverture 40 et est adapté pour former au minimum une structure du toit de la cabine 1.

Comme visible sur la figure 3, l'élément de toiture 15 comprend, par exemple, une enveloppe externe 51 et une enveloppe interne 53, avantageusement sensiblement horizontales.

L'enveloppe externe 51 et l'enveloppe interne 53 sont avantageusement reliées par des nervures 55.

L'enveloppe interne 53 définit une surface de collage 57 collée sur la surface de collage 49 de la structure 5, avantageusement de manière étanche.

Un procédé de fabrication de la cabine 1 va maintenant être décrit.

Le procédé comprend la fabrication de la structure 5, la fixation des équipements de cabine 10 sur la structure, et la fixation de l'élément de toiture 15 sur la structure.

La fabrication de la structure 5 comporte des sous-étapes connues en elles-mêmes et qui ne seront pas décrites ici. La particularité de cette étape de fabrication est qu'elle crée l'ouverture 40 présentant des dimensions perpendiculairement à la direction V qui sont suffisantes pour introduire dans l'espace intérieur 21 via l'ouverture 40 les équipements de cabine 10 dans l'espace intérieur 21 via l'ouverture 40, avant leur fixation sur le plancher 17 et/ou les parois latérales 19.

A nouveau, aucune des autres ouvertures de la structure 5 ne permettrait cette introduction.

Préalablement à leur introduction dans la structure 5, les équipements de cabine 10 sont assemblés de manière à former des blocs, et testés, de préférence en parallèle les uns avec les autres.

Pour fixer l'élément de toiture 15 sur la structure 5, des boulons 59 (dont un seul est représenté sur la figure 3) sont utilisés. Les boulons 59 relient mécaniquement le bord 47 des parois latérales 19 de la structure 5 à des parois 61 de l'élément de toiture 15, par exemple situées sous l'enveloppe interne 53.

Les boulons 59 sont avantageusement répartis le long du bord 47.

Pour réaliser la fixation de l'élément de toiture 15, les surfaces de collage 49, 57 sont également collées l'une à l'autre, avantageusement de manière étanche.

La fixation de l'élément de toiture 15 par boulonnage et collage participe structurellement à la rigidité de la cabine 1.

Grâce aux caractéristiques décrites ci-dessus, les équipements de cabine 10 sont apportés en bloc dans l'espace intérieur 21 via l'ouverture 40 et n'ont plus qu'à être fixés à la structure 5. Le procédé de fabrication est donc simplifié et est moins coûteux par rapport à des procédés antérieurs dans lesquels les équipements de cabine 10 étaient introduits en pièces détachées via les portes 17, 37 ou les fenêtres 39.

En outre, les équipements de cabine 10 sont avantageusement assemblés et testés, préalablement à leur installation dans l'espace intérieur 21, et de manière encore plus avantageuse en parallèle les uns avec les autres.

L'assemblage de la structure 5 et de l'élément de toiture 15 est étanche grâce au collage, et participe avantageusement à la rigidité de la cabine 1.

## Revendications

1. Procédé d'assemblage d'une cabine (1) pour véhicule ferroviaire, comprenant les étapes suivantes :
- fabrication d'une structure (5) mécano-soudée, la structure (5) étant adaptée pour former un plancher (17) et des parois latérales (19) de la cabine (1), la structure (5) définissant un espace intérieur (21) destiné à recevoir des équipements de cabine (10), les parois latérales (19) définissant ensemble au moins une ouverture (40) de la structure (5), l'ouverture (40) étant opposée au plancher (17) selon une direction (V) destinée à être verticale,
- fixation d'au moins un des équipements de cabine (10) sur la structure (5), l'équipement de cabine fixé (10) étant au préalable transporté dans l'espace intérieur (21) via l'ouverture (40), **caractérisé par** l'étape procédurale de
- fixation d'un élément de toiture (15) sur la structure (5), l'élément de toiture (15) fermant au moins partiellement l'ouverture (40), la fixation de l'élément de toiture (15) comportant un collage d'une première surface de collage (57), définie par l'élément de toiture (15), sur une deuxième surface de collage (49), définie par la structure (5).

2. Procédé selon la revendication 1, dans lequel l'équipement de cabine fixé (10) forme un bloc, les parois latérales (19) étant dépourvues de toute ouverture latérale par laquelle il serait possible de transporter ledit bloc vers l'espace intérieur (21).

3. Procédé selon la revendication 1 ou 2, dans lequel l'équipement de cabine (10) fixé comprend un pupitre (31), une armoire électrique (27) ou un siège (23).

4. Procédé selon l'une quelconque des revendications 1 à 3, comprenant la fixation de plusieurs équipements de cabine (10) sur la structure (5), chacun des équipements de cabine fixés (10) étant au préalable transporté dans l'espace intérieur (21) via l'ouverture (40).

5. Procédé selon la revendication 4, dans lequel lesdits plusieurs équipements de cabine fixés (10) sont préalablement assemblés et testés, de préférence en parallèle les uns avec les autres.

6. Procédé selon l'une quelconque des revendications 1 à 5, dans lequel l'élément de toiture (15) est boulonné sur la structure (5).

7. Cabine (1) pour véhicule ferroviaire, la cabine (1) étant adaptée pour être fabriquée par un procédé selon l'une quelconque des revendications 1 à 6, et comprenant :
- une structure (5) mécano-soudée, la structure (5) étant adaptée pour former un plancher (17) et des parois latérales (19) de la cabine (1), la structure (5) définissant un espace intérieur (21), les parois latérales (19) définissant ensemble au moins une ouverture (40) de la structure (5), l'ouverture (40) étant opposée au plancher (17) selon une direction (V) destinée à être verticale,
- au moins un équipement de cabine (10) situé dans l'espace intérieur (21) et fixé sur la structure (5),
- un élément de toiture (15) rapporté sur la structure et fermant au moins partiellement l'ouverture (40), **caractérisé en ce que**
- des boulons (59) fixent l'élément de toiture (15) sur la structure (5), les boulons (59) étant répartis le long d'un bord (47) de la structure (5) formant l'ouverture (40),
une première surface de collage (57), définie par l'élément de toiture (15), étant collée sur une deuxième surface de collage (49), définie par la structure (5).

## Patentansprüche

1. Verfahren zum Zusammenbauen einer Kabine (1) für ein Schienenfahrzeug, welches die folgenden Schritte aufweist:
- Herstellen einer mechanisch verschweißten Struktur (5), wobei die Struktur (5) angepasst ist, um einen Boden (17) und Seitenwände (19) der Kabine (1) zu bilden, wobei die Struktur (5) einen Innenraum (21) definiert, welcher dafür bestimmt ist, Kabinenausstattungen (10) aufzunehmen, wobei die Seitenwände (19) zusammen mindestens eine Öffnung (40) der Struktur (5) definieren, wobei die Öffnung (40) entlang einer Richtung (V), welche dafür bestimmt ist, vertikal zu sein, gegenüber vom Boden (17) ist,
- Befestigen von mindestens einer der Kabinenausstattungen (10) an der Struktur (5), wobei die befestigte Kabinenausstattung (10) zuvor via die Öffnung (40) in den Innenraum (21) transportiert wird, **gekennzeichnet durch** den Verfahrensschritt des
- Befestigens eines Dachelements (15) an der Struktur (5), wobei das Dachelement (15) die Öffnung (40) zumindest teilweise schließt, wobei das Befestigen des Dachelements (15) ein Kleben einer ersten Klebefläche (57), welche von dem Dachelement (15) definiert wird, an eine zweite Klebefläche (49), welche von der Struktur (5) definiert wird, aufweist.

2. Verfahren gemäß Anspruch 1, wobei die befestigte Kabinenausstattung (10) einen Block bildet, wobei die Seitenwände (19) ohne irgendeine Seitenöffnung sind, mittels welcher es möglich wäre, den besagten Block zu dem Innenraum (21) zu transportieren.

3. Verfahren gemäß Anspruch 1 oder 2, wobei die befestigte Kabinenausstattung (10) ein Pult (31), einen Schaltschrank (27) oder einen Sitz (23) aufweist.

4. Verfahren gemäß irgendeinem der Ansprüche 1 bis 3, welches das Befestigen von mehreren Kabinenausstattungen (10) an der Struktur (5) aufweist, wobei jede der befestigten Kabinenausstattungen (10) zuvor via die Öffnung (40) in den Innenraum (21) transportiert wird.

5. Verfahren gemäß Anspruch 4, wobei die besagten mehreren befestigten Kabinenausstattungen (10) zuvor zusammengebaut und getestet werden, vorzugsweise gleichzeitig miteinander.

6. Verfahren gemäß irgendeinem der Ansprüche 1 bis 5, wobei das Dachelement (15) an die Struktur (5) geschraubt wird.

7. Kabine (1) für ein Schienenfahrzeug, wobei die Kabine (1) angepasst ist, um mittels eines Verfahren gemäß irgendeinem der Ansprüche 1 bis 6 hergestellt zu werden, und aufweist:
- eine mechanisch geschweißte Struktur (5), wobei die Struktur (5) angepasst ist, um einen Boden (17) und Seitenwände (19) der Kabine (1) zu bilden, wobei die Struktur (5) einen Innenraum (21) definiert, wobei die Seitenwände (19) zusammen mindestens eine Öffnung (40) der Struktur (5) definieren, wobei die Öffnung (40) entlang einer Richtung (V), welche dazu bestimmt ist, vertikal zu sein, gegenüber vom Boden (17) ist,
- mindestens eine Kabinenausstattung (10), welche sich in dem Innenraum (21) befindet und an der Struktur (5) befestigt ist,
- ein Dachelement (15), welches an der Struktur befestigt ist und die Öffnung (40) zumindest teilweise schließt, **dadurch gekennzeichnet, dass**
- Schrauben (59) das Dachelement (15) an der Struktur (5) befestigen, wobei die Schrauben (59) entlang eines Randes (47) der Struktur (5), welcher die Öffnung (40) bildet, verteilt sind,
wobei eine erste Klebefläche (57), welche von dem Dachelement (15) definiert wird, an eine zweite Klebefläche (49), welche von der Struktur (5) definiert wird, geklebt ist.

## Claims

1. Method for assembling a cab (1) for a railway vehicle, comprising the following steps:
- manufacturing a mecano-welded structure (5), the structure (5) being adapted to form a floor (17) and side walls (19) of the cab (1), the structure (5) defining an interior space (21) which is to receive pieces of cab equipment (10), the side walls (19) together defining at least one opening (40) of the structure (5), the opening (40) being opposite the floor (17) in a direction (V) which is to be vertical,
- fixing at least one of the pieces of cab equipment (10) to the structure (5), the fixed piece of cab equipment (10) being transported into the interior space (21) beforehand *via* the opening (40),
**characterised by** the method step of
- fixing a roof element (15) to the structure (5), the roof element (15) closing the opening (40) at least partially, fixing of the roof element (15) comprising bonding a first bonding surface (57) defined by the roof element (15) to a second bonding surface (49) defined by the structure (5).

2. Method according to claim 1, wherein the fixed piece of cabin equipment (10) forms a unit, the side walls (19) having no lateral opening through which it would be possible to transport said unit to the interior space (21).

3. Method according to claim 1 or 2, wherein the fixed piece of cabin equipment (10) comprises a console (31), an electrical cabinet (27) or a seat (23).

4. Method according to any one of claims 1 to 3, comprising fixing multiple pieces of cab equipment (10) to the structure (5), each of the fixed pieces of cab equipment (10) being transported into the interior space (21) beforehand *via* the opening (40).

5. Method according to claim 4, wherein said multiple fixed pieces of cab equipment (10) are assembled and tested beforehand, preferably in parallel with one another.

6. Method according to any one of claims 1 to 5, wherein the roof element (15) is bolted to the structure (5).

7. Cab (1) for a railway vehicle, the cab (1) being adapted to be manufactured by a method according to any one of claims 1 to 6 and comprising:
- a mecano-welded structure (5), the structure (5) being adapted to form a floor (17) and side walls (19) of the cab (1), the structure (5) defining an interior space (21), the side walls (19) together defining at least one opening (40) of the structure (5), the opening (40) being opposite the floor (17) in a direction (V) which is to be vertical,
- at least one piece of cab equipment (10) situated in the interior space (21) and fixed to the structure (5),
- a roof element (15) attached to the structure and closing the opening (40) at least partially,
**characterised in that**
- bolts (59) fix the roof element (15) to the structure (5), the bolts (59) being distributed along an edge (47) of the structure (5) forming the opening (40), a first bonding surface (57) defined by the roof element (15) being bonded to a second bonding surface (49) defined by the structure (5).
